# FASCICULE DE BREVET EUROPEEN

(11) **EP 1 269 290 B1**
(45) Date de publication et mention de la délivrance du brevet: **26.05.2004**
(21) Numéro de dépôt: 01917164.4
(22) Date de dépôt: 16.03.2001
(51) Int. Cl.: G06F 1/00, G06F 9/38

(54) **PROCEDE DE CONTRE-MESURE POUR UN MICRO-CONTROLEUR BASE SUR UNE ARCHITECTURE AVEC "PIPELINE"**
GEGENMASSNAHMEVERFAHREN IN EINEM MIKROKONTROLLER MIT PIPELINEARCHITEKTUR
COUNTERMEASURE METHOD FOR A MICROCONTROLLER BASED ON A PIPELINE ARCHITECTURE

(30) Priorité: 06.04.2000 FR 0004426
(43) Date de publication de la demande: 02.01.2003
(73) Titulaire: GEMPLUS, 13420 Gémenos (FR)
(72) Inventeur: Feyt, Nathalie, F-13780 Cuges les Pins (FR)
(86) Numéro de dépôt international: PCT/FR2001/000794
(87) Numéro de publication internationale: WO 2001/077791

(56) Documents cités:
- EP-A- 0 977 108
- FR-A- 2 745 924
- US-A- 4 910 671
- COHEN F B: "OPERATING SYSTEM PROTECTION THROUGH PROGRAM EVOLUTION" COMPUTERS & SECURITY. INTERNATIONAL JOURNAL DEVOTED TO THE STUDY OF TECHNICAL AND FINANCIAL ASPECTS OF COMPUTER SECURITY,NL,ELSEVIER SCIENCE PUBLISHERS. AMSTERDAM, vol. 12, no. 6, 1 octobre 1993 (1993-10-01), pages 565-584, XP000415701 ISSN: 0167-4048

## Description

La présente invention concerne un procédé de contre-mesure pour un micro-contrôleur dans lequel des séquences d'instructions de programmes sont exécutées.

La présente invention s'applique en particulier à des composants électroniques sécurisés tels que des micro-contrôleurs pour carte à puce par exemple.

Les micro-contôleurs sont des circuits intégrés monolithiques incorporant au moins un microprocesseur, appelé encore CPU pour Central Processing Unit en terminologie anglaise. Ces micro-contrôleurs sont de véritables ordinateurs tenant sur un seul substrat de silicium, ou puce de circuit intégré.

Ainsi, les cartes à puce à micro-contrôleur constituent des supports d'informations sécurisés qui possèdent la même structure qu'un ordinateur, c'est à dire qu'elles permettent de stocker des données mais également de traiter des informations. Dans ce cadre, le rôle du micro-contrôleur est d'authentifier la carte et son porteur, de chiffrer et déchiffrer des messages et de calculer des signatures électroniques apportant la preuve qu'une opération licite a bien été réalisée.

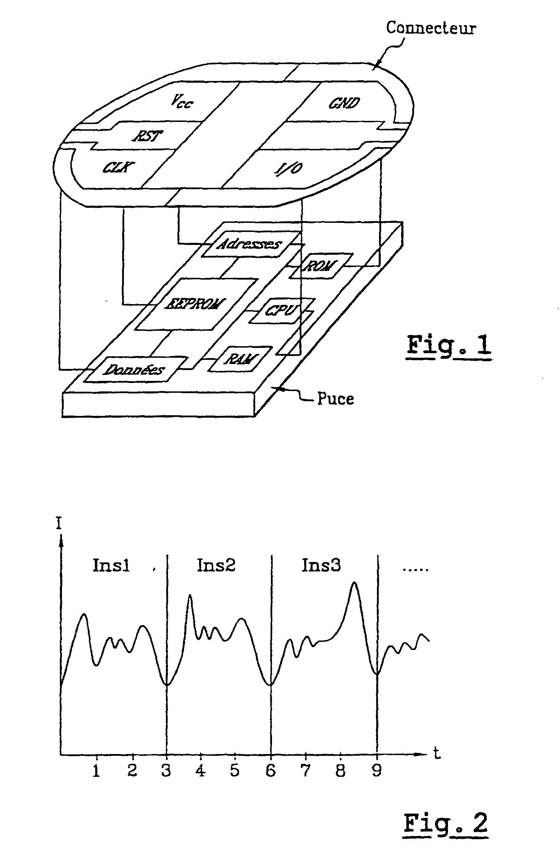

La figure 1 illustre schématiquement la structure d'un micro-contrôleur pour carte à puce. Un tel micro-contrôleur, intégré sur une puce, comporte un microprocesseur, ou CPU, apte à traiter les données et programmes enregistrés sur la puce. Le microprocesseur est associé à différents types de mémoires au moyen de bus de données. Les programmes de fonctionnement et les algorithmes sont généralement. stockés dans une mémoire ROM, tandis que les données, secrètes ou non, sont stockées dans une mémoire programmable de type EEPROM par exemple. Une mémoire RAM contient les registres de travail nécessaires aux divers traitements internes. Un organe d'entrée/sortie composé d'un connecteur, pour une carte à puce à contact, assure les dialogues avec le monde extérieur.

Les opérations du micro-contrôleur sont séquencées par une horloge (CLK). Le micro-contrôleur a en outre une alimentation Vcc et une terre GND.

Il existe essentiellement deux familles de micro-contrôleurs. La plupart des micro-contrôleurs existant aujourd'hui (environ 90%) sont basés sur une architecture CISC (de l'anglais Complex Instructions Set Computer) dans laquelle les instructions sont lues et exécutées séquentiellement par un gros moteur de décodage. Cependant, la tendance actuelle est d'utiliser de plus en plus des micro-contrôleurs à architecture RISC (de l'anglais Reduced Instruction Set Computer) dans laquelle les instructions sont lues et exécutées en parallèle. Une telle architecture nécessite plusieurs moteurs de décodage coûteux en place sur la puce de circuit intégré, mais elle est également beaucoup plus rapide dans l'exécution des séquences d'instructions. En particulier, les architectures RISC utilisant un procédé dit de « pipeline » permettent d'imbriquer plusieurs instructions en les divisant en sous-étapes et en exécutant des étapes de plusieurs instructions dans un même cycle d'horloge. Les particularités du « pipeline » en architecture RISC seront développées par la suite.

L'exécution de programmes par le micro-contrôleur doit donc être sécurisée car tout ou partie des données manipulées sont secrètes. La sécurisation peut être assurée par des algorithmes mathématiques intégrés aux programmes exécutés, et/ou par des procédés dits de contre-mesure.

Un procédé de contre-mesure est un procédé de sécurisation qui consiste à éviter que les données manipulées lors de l'exécution des instructions d'un programme puissent être interprétées à l'extérieur du composant sécurisé. Une telle fuite d'information est possible de par la structure même du micro-contrôleur qui peut subir ce que l'on appelle des attaques en courant, ou DPA pour Differential Power Attack en terminologie anglaise.

La figure 2 illustre le principe de l'attaque en courant par un graphe de la consommation de courant I de la puce en fonction du nombre de coups d'horloge t.

Lorsque le microprocesseur exécute un programme composé d'une séquence d'instructions (Ins1, Ins2, Ins3,...), avec un algorithme secret ou non, il va chercher les données nécessaires en mémoire, les traite et écrit les résultats en mémoire.

Classiquement, l'exécution d'une séquence d'instructions se déroule toujours de la même manière, identique et déterminée, quelque soit l'architecture (CISC ou RISC) du micro-contrôleur utilisé.

Il devient alors possible de réaliser une attaque en courant par la simple lecture de la consommation en courant du micro-contrôleur (à partir de son alimentation Vcc) qui peut laisser transparaître des informations sur les données secrètes manipulées. Pour obtenir de telles informations, il est nécessaire de réaliser la même séquence d'instructions plusieurs fois. Il devient alors possible de corréler la consommation de courant avec les données traitées lors de l'exécution de la même instruction. La consommation de courant du micro-contrôleur peut ainsi devenir un véritable témoin des données manipulées.

Par exemple, un attaquant peut procéder de la manière suivante. Si on considère une donnée secrète de huit octets k[i] avec i de 1 à 8. On utilise un accumulateur et on réalise une boucle pour i de 1 à 8 Acc= k[i]xor k[i+1]. A la fin de la boucle, on obtient Acc= xor (Σ (i=1à8) k[i]). Lorsque l'on observe la consommation de courant I en fonction du temps lors de cette séquence (boucle), on obtient une courbe à l'allure cyclique qui est le reflet de ce qui a été exécuté dans le micro-contôleur, c'est à dire que dans l'exemple cité on obtient huit signaux identiques pour les huit opérations de la boucle. Néanmoins, si l'on compare chaque élément des signaux, on parvient à extraire des différences, et ainsi des informations sur les k[i] secrets. L'observation est en outre facilité par la possibilité de faire exécuter la même boucle plusieurs fois. La consommation de courant de la carte étant la même pour une même séquence d'opérations, on parvient à extraire l'information recherchée.

Il devient par conséquent indispensable d'éliminer cette répétition dans la consommation de courant pour une même séquence d'instructions. C'est là l'objectif des procédés de contre-mesure.

De tels procédés de contre-mesure existent déjà, en particulier dans le domaine logiciel où des programmes comportant des variantes aléatoires peuvent être utilisées. De tels programmes peuvent faire appel à des sous-programmes de manière aléatoire. Ainsi, pour une même tâche répétée plusieurs fois, qui classiquement appellerait, la même séquence d'instructions, des sous-programmes différents sont appelés et entraînent l'exécution de différentes séquences d'instructions. La corrélation entre la consommation de courant et les données manipulées devient impossible.

Une telle solution logicielle est cependant lourde à mettre en oeuvre. Il faut en effet écrire les différents sous-programmes, ce qui est coûteux en temps de développement et en taille de code. Il est également connu par le document FR 2 745 924, un moyen de déccorélation du déroulement d'un programme avec les signaux d'un circuit

La présente invention a pour objet un procédé de contre-mesure qui résout les inconvénients de l'art , antérieur. L'invention propose un tel procédé de contre-mesure basé sur l'exécution des séquences d'instructions selon un procédé dit de « pipeline » dans un composant électronique à architecture RISC, par exemple.

L'invention introduit le principe de l'exécution aléatoire et non reproductible à chaque séquence d'instructions au niveau de l'instruction elle-même.

L'invention concerne plus particulièrement un procédé de contre mesure pour micro-contrôleur susceptible d'exécuter des séquences d'instructions, lesdites instructions étant exécutées selon un procédé dit de « pipeline », caractérisé en ce que le procédé consiste à introduire aléatoirement au moins un temps d'attente entre deux instructions consécutives et/ou au sein d'au moins une instruction.

Selon une caractéristique, les instructions sont décomposées en une pluralité de sous étapes.

Selon une particularité; les sous étapes peuvent consister dans :
- une étape d'acquisition de l'instruction,
- une étape de décodage de l'instruction,
- une étape d'exécution de l'instruction, et
- une étape d'écriture du. résultat de l'instruction.

Selon une caractéristique, le temps d'attente est introduit aléatoirement entre deux quelconques sous étapes d'une instruction.

Selon une autre caractéristique, les instructions peuvent être des macro-instructions correspondant à des modules logiques complexes tels que des sous-blocs d'algorithmes cryptographiques

Selon une autre caractéristique, le temps d'attente est introduit aléatoirement plusieurs fois au cours de l'exécution de la séquence d'instructions.

Selon une caractéristique, le temps d'attente est introduit suite à une commande logicielle précédant la séquence d'instructions à sécuriser.

Selon une caractéristique, le procédé est réalisé à travers une implantation non logicielle directement prise en charge par l'électronique de décodage d'instructions.

Selon une autre caractéristique, l'introduction du temps d'attente peut être régler de manière statique ou dynamique, au moyen d'un paramètre électronique ou logiciel, de manière à régler la variabilité de l'exécution d'une même séquence d'instructions.

Selon une mise en oeuvre de l'invention, le procédé est implémenté dans une puce de circuit intégré comportant un micro-contrôleur à architecture RISC avec « pipeline ».

L'invention s'applique avantageusement à tout dispositif sécurisé de type carte à puce.

L'invention présente l'avantage de proposer un mécanisme implémenté directement au niveau du micro-contrôleur, sur la puce de circuit intégré. On évite ainsi la lourdeur des solutions logicielles.

En outre, le procédé de contre mesure selon l'invention permet de garantir l'exécution de n'importe quel programme, sécurisé ou non, sur un composant électronique équipé d'un tel mécanisme de contre-mesure.

C'est en effet le composant lui-même, et non la séquence d'instructions du programme, qui assure l'exécution aléatoire et donc la sécurisation des données manipulées. Cela permet avantageusement d'avoir des programmes décorrélés du composant, ce qui peut s'avérer très utile dans le cadre de certaines applications. Un même composant peut ainsi être utilisé avec différents programmes sans perdre son niveau de sécurisation.

D'autre avantages et particularités de l'invention apparaîtront au cours de la description qui suit donnée à titre d'exemple illustratif et non limitatif en référence aux figures dans lesquelles :
- La figure 1, déjà décrite, illustre schématiquement une puce de circuit intégré munie d'un micro-contrôleur,
- La figure 2, déjà décrite, est un graphe illustrant le procédé de l'attaque en courant d'un composant électronique sécurisé,
- La figure 3 est un schéma illustrant le fonctionnement d'un micro-contrôleur classique à architecture CISC pour un décodage d'instructions,
- La figure 4 est un schéma illustrant le fonctionnement d'un micro-contrôleur classique à architecture RISC pour un décodage d'instructions,
- La figure 5 est un schéma illustrant le fonctionnement d'un micro-contrôleur à architecture RISC selon la présente invention, pour un décodage d'instructions,

Le procédé de contre-mesure selon l'invention est basé sur le principe du traitement des instructions en pipeline utilisé généralement dans un micro-contrôleur à architecture RISC.

Plusieurs points distinguent l'architecture RISC de l'architecture CISC.

D'une part, à chaque instruction correspond un seul bloc logique implémenté sous forme d'un sous module électronique spécifique et unique, de sorte que le décodage et l'exécution d'une instruction puisse se faire en un seul cycle d'horloge, alors que l'architecture CISC utilise un unique bloc électronique traitant séquenciellement toutes les instructions.

D'autre part, le bus de données est différencié du bus d'instructions pour permettre le décodage d'une instruction à chaque cycle d'horloge indépendamment des données stockées en mémoire et utilisées par les autres instructions. Cela permet d'aller chercher des données en mémoire simultanément au décodage des instructions qui doivent les traiter. En outre toutes les instructions doivent avoir une taille au plus égale à celle du bus externe de données de sorte que le décodage des instructions soit directe et n'implique aucun délai.

On distingue en général deux modèles de micro-contrôleurs à architecture R.I.S.C.,
- le modèle de « Stanford » qui utilise des chaînages d'instructions optimisées plus communément connus sous le terme technique de « pipeline », permettant d'utiliser un jeu d'instructions très puissant ;
- le modèle de « Berkeley » qui utilise des enchaînements d'instructions permettant des appels rapides à des sous-routines et particulièrement adapté à des applications temps réel.

La présente invention s'applique plus spécifiquement à la technique de « pipeline » proposée dans le modèle de « Stanford ». En effet, l'invention propose un procédé de contre-mesure qui s'appuie sur cette architecture de pipeline.

Les « pipelines » permettent d'imbriquer l'exécution de plusieurs instructions en divisant chaque instruction en plusieurs sous-étapes et en exécutant ces sous-étapes en parallèle. On défini ainsi un étage de pipeline comme l'ensemble des sous-étapes exécutées simultanément. Ainsi, le nombre de cycle d'horloge par instruction sera divisé proportionnellement au nombre d'étages du pipeline.

Il faut noter que lors de l'exécution d'un programme, plus simplement d'une suite d'instructions, le fonctionnement du pipeline peut être cassé lorsque surviennent des instructions du type branchement, saut, interruption et d'autres exceptions à l'exécution linéaire d'instructions.

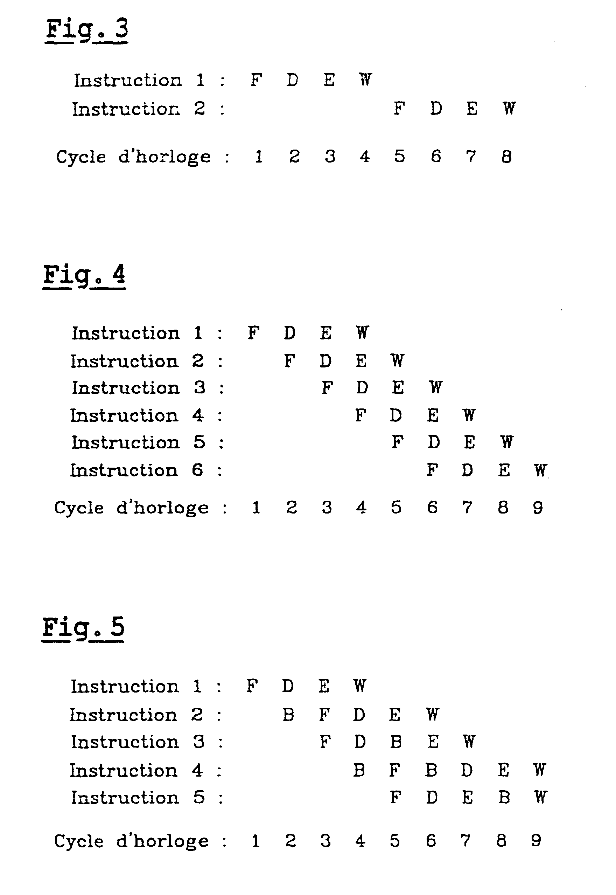

Les figures 3 et 4 illustrent respectivement le fonctionnement classique d'un micro-contrôleur à architecture CISC et à architecture RISC avec pipeline.

Les instructions INSn peuvent être des instructions simples ou des macro-instructions correspondant à des modules logiques complexes, tels que des sous blocs d'algorithmes cryptographiques, comme par exemple des instructions de permutation, compression, expansion, des fonctions mathématiques non basiques, des tables de correspondance, ou autre.

Les instructions INSn sont avantageusement décomposées en plusieurs sous-étapes. Un exemple de décomposition en quatre sous étapes est donnée à titre d'exemple et ne doit pas être considérée comme restrictive.

La première étape « F », de l'acronyme anglo-saxon « FETCH », permet d'aller chercher en mémoire l'instruction à décoder. Elle place sur le bus cette instruction qui est ensuite transmise à l'étage suivant.

La deuxième étape « D », de l'acronyme anglo-saxon « DECODE », permet de décoder l'instruction, c'est à dire d'activer le sous module du micro-contrôleur qui sait traiter cette instruction.

La troisième étape « E », de l'acronyme anglo-saxon « EXECUTE », permet de faire exécuter l'instruction dans le sous module du micro-contrôleur.

La dernière étape « W », de l'acronyme anglo-saxon « WRITE », permet d'écrire le résultat de l'instruction exécutée par le sous module du micro-contrôleur sur le bus. Ce résultat est ensuite utilisé dans la suite de l'exécution ou retourné en mémoire.

On constate, à partir de la figure 3, que seulement deux instructions ont pu être achevées en huit cycles d'horloge par un micro-contrôleur à architecture CISC.

A l'inverse, comme illustré sur la figure 4, pour un « pipeline » à quatre sous-étapes, six instructions ont pu être achevées en seulement neuf cycles d'horloge. Le temps d'exécution global est réduit parce que des sous-étapes de plusieurs instructions ont pu être exécutées simultanément.

Une telle architecture n'est cependant pas à l'abris d'une attaque en courant. En effet, si on répète la même séquence d'instructions plusieurs fois, on aura toujours le même enchaînement d'étages du pipeline avec la même consommation de courant.

Afin de résoudre le problème engendré par les attaques en courant et d'éviter la reproductibilité de la consommation de courant pour une même séquence d'instructions exécutée plusieurs fois, on introduit aléatoirement un temps d'attente, Break B, dans le traitement des instructions. Ce temps d'attente B peut être introduit, aléatoirement au début d'une instruction et/ou entre deux quelconques sous-étapes d'une même instruction.

Le temps d'attente aléatoire B peut également être introduit plusieurs fois si nécessaire au cours de l'exécution d'une séquence d'instructions.

La figure 5 illustre le mécanisme du procédé de contre mesure selon l'invention.

Les temps d'attente aléatoires B empêchent toute reproductibilité de la consommation en courant en modifiant, à chaque séquence d'instructions, les étages du pipeline sans perturber l'exécution des instructions.

Le procédé selon l'invention est réalisé à travers une implémentation non logicielle, directement mise en oeuvre par le module électronique (hardware) de décodage des instructions du micro-contrôleur.

Dans son fonctionnement, le procédé peut être réglable, de manière statique ou dynamique, par des moyens électroniques ou logiciels, afin d'obtenir plus ou moins de variabilité dans l'exécution répétée d'une même séquence d'instructions.

Selon une possibilité de mise en oeuvre du procédé selon l'invention, l'introduction du temps d'attente B peut être conditionnée à une mise en route commandée de manière logicielle, par exemple, juste avant l'exécution de la séquence d'instructions que l'on souhaite sécuriser. Ainsi, on ne compromet pas la rapidité d'exécution d'une séquence d'instructions qui ne nécessite aucune sécurisation particulière.

Le procédé selon l'invention permet ainsi d'assurer l'exécution aléatoire d'une séquence d'instructions, c'est à dire la non reproductibilité de cette séquence d'une exécution à l'autre, et cela pour un même résultat fonctionnel.

Un compromis doit simplement être défini afin de ne pas trop rallonger le temps d'exécution de la séquence d'instructions et perdre ainsi l'avantage principal du pipeline.

## Revendications

1. Procédé de contre mesure pour micro-contrôleur susceptible d'exécuter des séquences d'instructions (INSn), lesdites instructions étant exécutées selon un procédé dit de « pipeline », **caractérisé en ce que** le procédé consiste à introduire aléatoirement au moins un temps d'attente (B) entre deux instructions consécutives (INSn, INSn+1) et/ou au sein d'au moins une instruction (INSn).

2. Procédé de contre mesure selon la revendication 1, **caractérisé en ce que** les instructions (INSn) sont décomposées en une pluralité de sous étapes.

3. Procédé de contre mesure selon la revendication 2, **caractérisé en ce que** les sous étapes consistent dans :
- une étape d'acquisition de l'instruction (F),
- une étape de décodage de l'instruction (D),
- une étape d'exécution de l'instruction (E), et
- une étape d'écriture du résultat de l'instruction (W).

4. Procédé de contre mesure selon l'une des revendications 2 à 3, **caractérisé en ce que** le temps d'attente (B) est introduit aléatoirement entre deux quelconques sous étapes d'une instruction (INSn).

5. Procédé de contre mesure selon la revendication 1, **caractérisé en ce que** les instructions (INSn) sont des macro-instructions correspondant à des modules logiques complexes tel que des sous-blocs d'algorithmes cryptographiques.

6. Procédé de contre mesure selon l'une quelconque des revendications précédentes, **caractérisé en ce que** le temps d'attente (B) est introduit aléatoirement plusieurs fois au cours de l'exécution de la séquence d'instructions.

7. Procédé de contre mesure selon l'une quelconque des revendications précédentes, **caractérisé en ce que** le temps d'attente (B) est introduit suite à une commande logicielle précédant la séquence d'instructions à sécuriser.

8. Procédé de contre mesure selon l'une quelconque des revendications précédentes, **caractérisé en ce qu'**il est réalisé à travers une implémentation non logicielle directement prise en charge par l'électronique de décodage d'instructions du micro-contrôleur.

9. Procédé de contre mesure selon l'une quelconque des revendications précédentes, **caractérisé en ce que** l'introduction du temps d'attente (B) est réglé de manière statique ou dynamique, au moyen d'un paramètre électronique ou logiciel, de manière à régler la variabilité de l'exécution d'une même séquence d'instructions.

10. Procédé selon l'une quelconque des revendications précédentes, **caractérisé en ce qu'**il est implémenté dans une puce de circuit intégré comportant un micro-contrôleur à architecture RISC avec "pipeline".

11. Dispositif sécurisé, de type carte à puce, **caractérisé en ce qu'**il comporte un composant électronique apte à mettre en oeuvre le procédé de contre mesure selon l'une quelconque des revendications 1 à 10.

## Patentansprüche

1. Zur Ausführung von Anweisungssequenzen (INSn) geeignetes Gegenmaßnahmenverfahren für Mikrosteuerbaustein, wobei die genannten Anweisungen gemäß einem als "Pipeline" bezeichneten Verfahren ausgeführt werden, **dadurch gekennzeichnet, dass** das Verfahren in der zufälligen Einführung wenigstens einer Wartezeit (B) zwischen zwei aufeinander folgenden Anweisungen (INSn, INS+1) und / oder innerhalb wenigstens einer Anweisung (INSn) besteht.

2. Gegenmaßnahmenverfahren gemäß Anspruch 1, **dadurch gekennzeichnet, dass** die Anweisungen (INSn) in eine Vielzahl von Unteretappen aufgeteilt sind.

3. Gegenmaßnahmenverfahren gemäß Anspruch 2, **dadurch gekennzeichnet, dass** die Unteretappen aus Folgendem bestehen:
- einer Erfassungsetappe der Anweisung (F),
- einer Decodierungsetappe der Anweisung (D),
- einer Ausführungsetappe der Anweisung (E) und
- einer Schreibetappe des Ergebnisses der Anweisung (W)

4. Gegenmaßnahmenverfahren gemäß Anspruch 2 bis 3, **dadurch gekennzeichnet, dass** die Wartezeit (B) zufällig zwischen zwei beliebigen Unteretappen einer Anweisung (INSn) eingeführt wird.

5. Gegenmaßnahmenverfahren gemäß Anspruch 1, **dadurch gekennzeichnet, dass** die Anweisungen (INSn) logischen komplexen Modulen, wie zum Beispiel kryptographische Algorithmen-Unterblöcke, entsprechende Makro-Anweisungen sind.

6. Gegenmaßnahmenverfahren gemäß einem der vorherigen Ansprüche, **dadurch gekennzeichnet, dass** die Wartezeit (B) mehrere Male im Verlauf der Ausführung der Anweisungssequenz zufällig eingeführt wird.

7. Gegenmaßnahmenverfahren gemäß einem der vorherigen Ansprüche, **dadurch gekennzeichnet, dass** die Wartezeit (B) im Anschluss an einen der zu sichernden Anweisungssequenz vorhergehenden Softwarebefehl eingeführt wird.

8. Gegenmaßnahmenverfahren gemäß einem der vorherigen Ansprüche, **dadurch gekennzeichnet, dass** es über eine direkt durch die Dekodierungselektronik von Anweisungen des Mikrosteuerbausteins unterstützte softwarefremde Implementierung realisiert wird.

9. Gegenmaßnahmenverfahren gemäß einem der vorherigen Ansprüche, **dadurch gekennzeichnet, dass** die Einführung der Wartezeit (B) statisch oder dynamisch mittels eines elektronischen oder Software-Parameters derart eingestellt wird, dass die Variabilität der Ausführung ein und derselben Anweisungssequenz eingestellt wird.

10. Gegenmaßnahmenverfahren gemäß einem der vorherigen Ansprüche, **dadurch gekennzeichnet, dass** es in einem einen Mikrosteuerbaustein mit RISC-Architektur mit "Pipeline" enthaltenden IS-Chip implementiert wird.

11. Gesicherte Vorrichtung vom Typ Chipkarte, **dadurch gekennzeichnet, dass** sie eine zur Umsetzung des Gegenmaßnahmenverfahrens gemäß Anspruch 1 bis 10 geeignete elektronische Komponente umfasst.

## Claims

1. Countermeasure method for a microcontroller capable of executing sequences of instructions (INSn), said instructions being executed according to a process known as a "pipeline" process, **characterized in that** the method consists in randomly introducing at least one waiting time (B) between two consecutive instructions (INSn, INSn+1) and/or within at least one instruction (INSn).

2. Countermeasure method according to Claim 1, **characterized in that** the instructions (INSn) are broken down into a number of substeps.

3. Countermeasure method according to Claim 2, **characterized in that** the substeps consist of:
- a step of fetching the instruction (F),
- a step of decoding the instruction (D),
- a step of executing the instruction (E) and
- a step of writing the result of the instruction (W).

4. Countermeasure method according to either of Claims 2 and 3, **characterized in that** the waiting time (B) is randomly introduced between any two substeps of an instruction (INSn).

5. Countermeasure method according to Claim 1, **characterized in that** the instructions (INSn) are macroinstructions corresponding to complex logic modules such as cryptographic algorithm sub-blocks.

6. Countermeasure method according to any one of the preceding claims, **characterized in that** the waiting time (B) is randomly introduced several times during the execution of the sequence of instructions.

7. Countermeasure method according to any one of the preceding claims, **characterized in that** the waiting time (B) is introduced following a software command preceding the sequence of instructions that is to be secured.

8. Countermeasure method according to any one of the preceding claims, **characterized in that** it is carried out by means of a non-software implementation that is directly undertaken by the instruction decoding electronics of the microcontroller.

9. Countermeasure method according to any one of the preceding claims, **characterized in that** the introduction of the waiting time (B) is controlled statically or dynamically, by means of an electronic or software parameter, so as to control the variability with which one and the same sequence of instructions is executed.

10. Method according to any one of the preceding claims, **characterized in that** it is implemented in an integrated circuit chip that comprises a microcontroller with RISC architecture with "pipeline".

11. Secure device, of the smart card type, **characterized in that** it comprises an electronic component capable of implementing the countermeasure method according to any one of Claims 1 to 10.
